# EUROPÄISCHE PATENTSCHRIFT

(11) **EP 1 066 122 B1**
(45) Veröffentlichungstag und Bekanntmachung des Hinweises auf die Patenterteilung: **19.11.2003**
(21) Anmeldenummer: 99917884.1
(22) Anmeldetag: 26.03.1999
(51) Int. Cl.: B08B 1/04, A46B 13/02, B60S 3/04, B63B 59/06, B64F 5/00

(54) **REINIGUNGSGERÄT**
CLEANING DEVICE
DISPOSITIF DE NETTOYAGE

(30) Priorität: 26.03.1998 DE 19813428
(43) Veröffentlichungstag der Anmeldung: 10.01.2001
(73) Patentinhaber: Britt, William James, 70184 Stuttgart (DE)
(72) Erfinder: Britt, William James, 70184 Stuttgart (DE)
(74) Vertreter: Lutz, Johannes Dieter, Dr.
(86) Internationale Anmeldenummer: EP9902097
(87) Internationale Veröffentlichungsnummer: WO99048623

(56) Entgegenhaltungen:
- EP-A- 0 701 870
- WO-A-95/04203
- DE-A- 4 315 320
- GB-A- 2 204 375
- US-A- 5 220 704
- US-A- 5 301 472
- PATENT ABSTRACTS OF JAPAN vol. 98, no. 5, 30. April 1998 (1998-04-30) -& JP 10 023926 A (YASUDA TOSHIMITSU), 27. Januar 1998 (1998-01-27)

## Beschreibung

Die Erfindung betrifft eine Reinigungslanze für die Säuberung der Außenhaut von Luft- und Land-Fahrzeugen sowie ggf. von Bootskörpern und mit den weiteren, im Oberbegriff des Patentanspruchs 1 genannten, gattungsbestimmenden Merkmalen.

Kleinflugzeuge wie ein- oder zweimotorige Sportmaschinen, aber auch turbinen- oder düsen-getriebene kleinere Geschäftsflugzeuge werden gewöhnlich in der Weise gereinigt, daß ihre Außenhaut mittels eines Sprühgeräts, mit unter Druck stehender Reinigungsflüssigkeit, z.B. Wasser, in dem ein Reinigungsmittel gelöst sein kann, besprüht wird und hiernach mit Schwämmen oder Stielbürsten die Außenhaut der Flugzeugzelle, des Rumpfes sowie der Tragflächen in aufwendiger Handarbeit gereinigt und anschließend mittels geeigneter Polierlappen oder -kissen poliert wird. Diese Arbeiten sind sehr zeitaufwendig und, wenn sie von bezahlten Arbeitskräften ausgeführt werden müssen, entsprechend kostenträchtig.

Aufgabe der Erfindung ist es daher, ein universell verwendbares, diese Arbeiten vereinfachendes und insbesondere bequem benutzbares Reinigungsgerät in der Form einer Lanze zu schaffen, die es erlaubt, einen relativ großflächigen Bereich reinigen zu können, bevor der Standort des Benutzers des Reinigungsgeräts gewechselt werden muß.

Diese Aufgabe wird gemäß den kennzeichnenden Merkmalen des Patentanspruchs 1 gelöst, wobei dadurch, daß eine Feststellvorrichtung vorgesehen ist, mittels derer der Reinigungskopf in definierten Orientierungen bezüglich des rohrförmigen Schaftes lösbar feststellbar ist und diese Feststellvorrichtung, die mittels eines an einem Griffabschnitt des Reinigungsgeräts angeordneten Betätigungselements lösbar ist, nach einer Aufhebung der Lösebetätigung wieder selbsttätig in die Feststellfunktionsstellung einrückt, der Benutzer des Reinigungsgeräts stets die Möglichkeit hat, die Orientierung des Reinigungskopfes dem Verlauf der zu reinigenden Fläche anpassen zu können und den Reinigungskopf des lanzenförmigen Reinigungsgeräts mit einem geringstmöglichen Kraftaufwand über die zu reinigende Fläche hinwegführen zu können.

Weitere vorteilhafte Gestaltungen des erfindungsgemäßen Reinigungsgeräts ergeben sich aus den Merkmalen der Ansprüche 2 bis 6, durch die weitere Funktions- und Gebrauchsvorteile erzielt werden:

Unter Nutzung der verschiedenen Einstellmöglichkeiten der Orientierung der Reinigungskopfes, ggf. unter Drehung des Reinigungsgeräts insgesamt um seine Längsachse, ist es möglich, praktisch aus ein und derselben Position heraus, sowohl die Unterseite, als auch die Oberseite der Tragfläche eines Flugzeuges zu reinigen. Durch die Austauschbarkeit des Reinigungswerkzeuges, z.B. einer rotierenden Reinigungsbürste, gegen ein rotatorisch antreibbares Polier-Polster oder -Pad am Reinigungskopf und durch die Zuführbarkeit von Reinigungsflüssigkeit mittels der Sprüheinrichtung zum Arbeitsbereich ist das erfindungsgemäße Reinigungsgerät gleichsam universell verwendbar und erforderlichenfalls auch für die genannten Funktionen einzeln verwendbar.

Die Reinigungslanze ist sowohl für eine professionelle Benutzung als auch für eine Benutzung durch Privatpersonen geeignet, da sie aufgrund ihres einfachen Aufbaus hinreichend preisgünstig herstellbar ist.

Weitere Einzelheiten des erfindungsgemäßen Reinigungsgeräts ergeben sich aus der nachfolgenden Beschreibung eines speziellen Ausführungsbeispiels sowie von Abwandlungsmöglichkeiten desselben anhand der Zeichnung. Es zeigen:
- Fig. 1:: Eine schematisch vereinfachte, perspektivische Darstellung des erfindungsgemäßen Reinigungsgeräts, mit einem am Ende eines langgestreckt - rohrförmigen Schaftes angeordneten, gelenkig mit diesem Schaft verbundenen Reinigungskopf,
- Fig. 2: Einzelheiten einer ausgewählten gelenkigen Verbindung des Reinigungskopfes mit dem Schaft, teilweise im Schnitt längs einer die zentrale Längsachse des Schafts enthaltenden Mittelebene,
- Fig. 3: eine Sprühvorrichtung des Reinigungsgeräts in schematisch vereinfachter Darstellung, gesehen in Richtung des Pfeils III der Figur 2,
- Fig. 4: eine schematisch vereinfachte Darstellung eines möglichen Einsatzes des erfindungsgemäßen Reinigungsgeräts gemäß den Figuren 1-3,
- Fig. 5a: eine schematisch vereinfachte Seiten-Ansicht eines zur Versorgung der Reinigungslanze mit Wasch- und Spülflüssigkeit geeigneten Versorgungswagens und
- Fig. 5b: den Versorgungswagen gemäß Fig. 5a in Draufsicht.

Zweck des in den Zeichnungsfiguren jeweils insgesamt mit 10 bezeichneten Reinigungsgerätes ist es, insbesondere die Außenhaut von Fahrzeugen der verschiedensten Art, z.B. von Kleinflugzeugen, größeren Sraßenfahrzeugen oder auch von Segelbooten oder dergleichen auf rationelle Weise reinigen zu können, d.h. sowohl mit geringem Personaleinsatz auszukommen, als auch dem Anwender des Gerätes ein bequemes und kräftesparendes Arbeiten zu ermöglichen.

Das Reinigungsgerät 10 ist - im wesentlichen - in Form einer langgestreckten, schlanken Lanze ausgebildet, bei der sich zwischen einem mit zwei Handgriffen 11 und 12 versehenen, insgesamt mit 13 bezeichneten Griffabschnitt und einem gleichsam die Lanzenspitze bildenden, insgesamt mit 14 bezeichneten Reinigungskopf ein rohrförmig ausgebildeter, insgesamt mit 16 bezeichneter Schaft erstreckt, an dessen vom Griffabschnitt 13 entfernt angeordnetem Endabschnitt 17 der Reinigungskopf 14 um eine rechtwinklig zur zentralen Längsachse 18 des Schafts 16 verlaufende Achse 19 schwenkbar und in definierten Schwenkposition um diese Achse 19 feststellbar angeordnet ist.

Bei dem zur Erläuterung gewählten, speziellen Ausführungsbeispiel umfaßt der Reinigungskopf eine rotatorisch antreibbare Reinigungsbürste 21, die in einem flachtopfförmigen, einseitig offenen Gehäuse 22 um eine zu dessen Boden 23 rechtwinklig verlaufende, zentrale Achse 24 drehbar gelagert und mit ihrem nachgiebigen Borstenbesatz 26 an der zu reinigenden Fläche 27 der Außenhaut eines Luft- oder Straßenfahrzeuges abstützbar ist.

Die durch den freien, kreisförmigen Rand 28 des Gehäuses 22 des Reingungskopfes 14 markierte Ebene verläuft von der Schwenkachse 19 in einem Abstand, der etwa dem Radius R des Kopfkreises 29 der insgesamt mit 31 bezeichneten Zahnung einer stabilen, sektorförmigen Zahnscheibe 32 entspricht, die mit einem trapezförmigen Fußabschnitt 33 an der Außenseite des Bodens 23 des Reinigungskopf-Gehäuses 22 befestigt ist und von diesem senkrecht aufragt, wobei die rechtwinklig zur Schwenkachse 19 verlaufende Mittelebene dieser Sektor-Zahnscheibe 32 in einer die zentrale Achse 24 des Reinigungskopfes 14 enthaltenden Radialebene desselben verläuft.

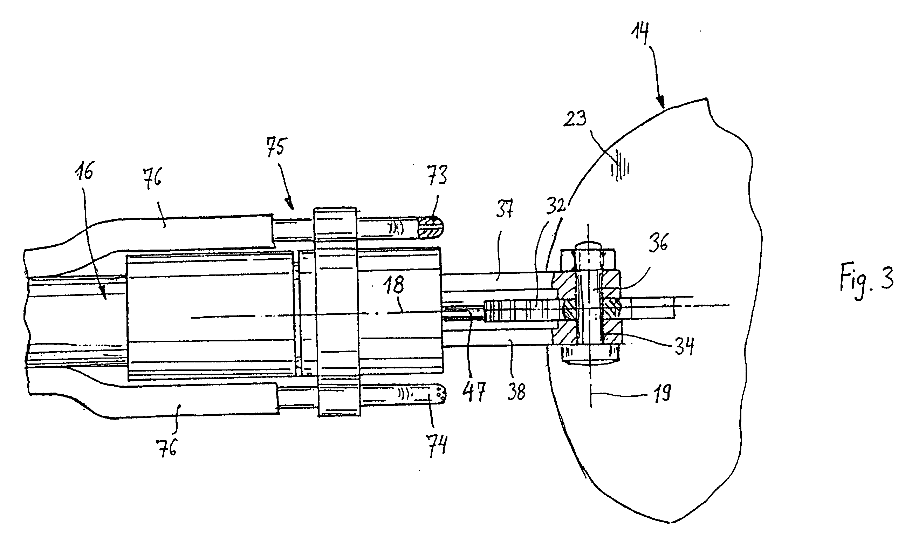

Die Sektor-Zahnscheibe 32 ist mit einer mit der Schwenkachse 19 konzentrischen Lager-Bohrung 34 versehen, durch die ein Lager-Bolzen 36 hindurchtritt, der lösbar fest mit flachstab-förmigen Lagerschenkeln 37 und 38 (Fig. 3) verbunden ist, die sich mit zur zentralen Längsachse 18 des Schafts 16 parallelem Verlauf, von diesem ausgehend beidseits der Sektor-Zahnscheibe 32 erstrecken und auch deren seitliche Abstützung vermitteln.

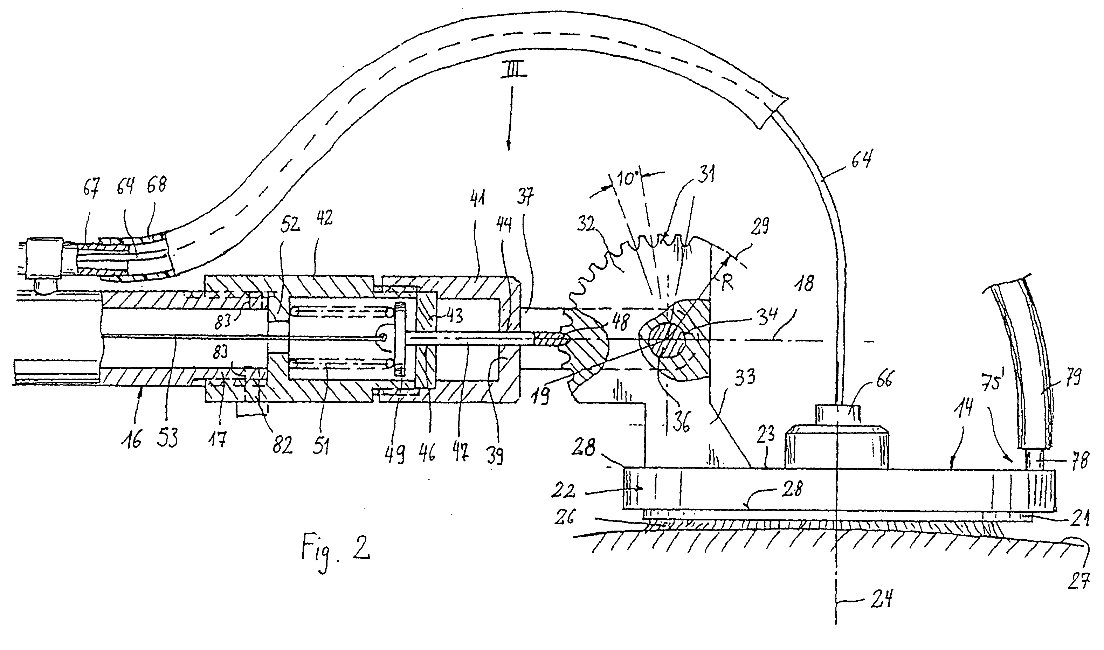

Die beiden Lagerschenkel 37 und 38 gehen bei dem zur Erläuterung gewählten speziellen Ausführungsbeispiel vom Boden 39 eines gemäß der Darstellung der Figur 2 zylindrisch-topfförmigen Montageteils 41 aus, das seinerseits über ein der Grundform nach zylindrisch-rohrförmiges Zwischenstück 42 fest mit dem Endabschnitt 17 des Schafts 16 lösbar verbindbar ist, wobei das zylindrisch-topfförmige Montagestück 41 mit dem Zwischenstück 42 koaxial bezüglich der zentralen Längsachse 18 des Schafts 16 angeordnet sind. Sie sind durch jeweils miteinander kämmende Innen- und Außengewinde miteinander bzw. mit dem Schaft 16 verbunden.

Der Boden 39 des zylindrisch-topfförmigen Montageteils 41 und eine zwischen diesem und dem Zwischenstück 42 eingespannte Führungs-Ringscheibe 43 sind mit miteinander fluchtenden, zentralen Bohrungen 44 und 46 versehen, in denen ein stabiler, stabförmiger Stößel 47 axial verschiebbar angeordnet ist, dessen freies Ende 48 eine zu der Zahnung 31 der Sektor-Zahnscheibe 32 komplementäre Form hat, so daß durch einen Eingriff dieses freien Verankerungsendes 48 mit der Zahnung 31 eine formschlüssige Fixierung des Reinigungskopfes 14 in einer gewählten Schwenklage erzielbar ist. Der Stößel 47 ist an seinem innerhalb des Zwischenstücks 42 angeordneten Ende mit einem radialen, kreisscheibenförmigen Stützflansch 49 versehen, an dem eine axial vorgespannte Druck-Wendelfeder 51 angreift, die sich schaftseitig axial an einer inneren Ringschulter 52 des Zwischenstücks 42 abstützt und den Stößel 47 in die Eingriffsposition seines freien Endes 48 mit der zahnung 31 drängt und selbsttätig in dieser Eingriffsstellung hält.

Durch Zug-Betätigung eines zugfesten Drahtseils 53, das im Inneren des rohrförmigen Schaftes 16 verläuft, kann der Stößel 47 aus seiner Eingriffsstellung mit der Sektor-Zahnscheibe 32 axial ausgerückt werden, um die Schwenkposition des Reinigungskopfes 14, ggf. während des Reinigungsbetriebes, neu einstellen zu können.

Zur diesbezüglichen Entriegelungsbetätigungen des Stößels 47 ist im Griffabschnitt 13 der Reinigungslanze ein lediglich schematisch angedeuteter Handhebel 54 vorgesehen, durch dessen Schwenk-Betätigung der erforderliche Zug auf das Drahtseil 53 ausübbar ist.

Der Handhebel 54 ist als zweiarmiger Hebel vorausgesetzt, dessen aus einem Gehäuse des Griffabschnittes radial herausragender Kraftarm signifikant länger ist als der mit dem Drehteil 53 verbundene Lastarm, so daß die Kraft mit der der Hebel zum Ausrücken des Stößels 47 betätigt werden muß, gegenüber der Kraft der Wendelfeder entsprechend untersetzt ist.

Bei dem zur Erläuterung gewählten, speziellen Ausführungsbeispiel ist die den Lagerkörper des Schwenklagers des Reinigungskopfes 14 bildende Sektor-Zahnscheibe 32 so ausgelegt, daß die Schwenklagen, in denen der Reinigungskopf 14 mittels des Verankerungsstößels 47 festlegbar ist, in Schrittweiten von 10° veränderbar sind, wobei der gesamte Schwenkwinkelbereich, innerhalb dessen die möglichen Positionen liegen, 120° beträgt. Die Anordnung der Sektor-Zahnscheibe 32 ist hierbei so gewählt, daß, ausgehend von der dargestellten Schwenkposition des Reingungskopfes 14, in der die Ebene des Ringrandes 28 des Reinigungskopf-Gehäuses 22 parallel zur zentralen Längsachse 18 des Schaftes 16 verläuft, der Reinigungskopf gemäß der Darstellung der Fig. 2 um 100° entgegen dem Uhrzeigersinn oder um 20° im Uhrzeigersinn geschwenkt und in insgesamt dreizehn Positionen fest verriegelt werden kann. Soll, abweichend von der dargestellten Arbeitsposition, in der die zu reinigende Fläche 27 nach oben weist, eine Fläche von unten her gereinigt werden, so wird die Reinigungslanze 10 um 180° um ihre zentrale Längsachse gedreht, so daß, verglichen mit der dargestellten Position, der Borstenbesatz 26 ihrer Reinigungsbürste 21 nach oben weist.

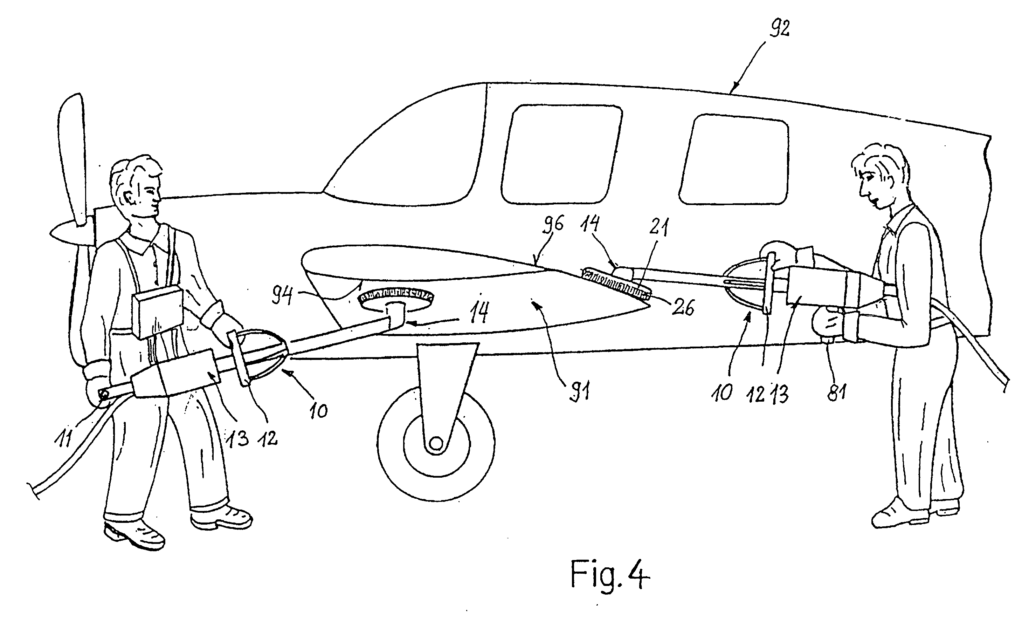

Die insoweit erläuterten Arten der Benutzung der Reinigungslanze 10 im Sinne der Fig. 4 am Beispiel der Reinigung eines Tragflügels 91 eines einmotorigen Kleinflugzeuges 92 dargestellt, das als Tiefdecker ausgebildet ist, bei dem sich die Tragflügel 91, wenn das Flugzeug abgestellt ist, in einer mittleren Höhe um 1m über der schematisch angedeuteten Abstellfläche 93 erstrecken. Im linken Teil der Figur 4 ist die Benutzungssituation veranschaulicht, in der der Benutzer die Unterseite 94 des Tragflügels 91 zu reinigen hat. Er hält mit seiner einen Hand die Reinigungslanze 10 an den kreisringförmigigen Handgriff 12 und mit der anderen Hand an den Handgriff 11, der am benutzerseitigen Ende des Griffabschnitts 13 angeordnet ist in einer "tiefen" Position unterhalb der zu reinigenden Unterseite 94 des Tragflügels 91 so, das durch ein Anlegen der Reinigungslanze 10 mittels des kreisringförmigen Handgriffs 12, der sich im Schwerpunktbereich der Lanze befindet, mit einem Niederdrücken derselben mittels des endständigen Handgriffs 11 bequem die dargestellte Reinigungsposition des Reinigungskopfes 15 erzielen läßt.

Im rechten Teil der Fig. 4 ist die Benutzungssituation veranschaulicht, in der der Benutzer die Hohlseite 96 des Tragflügels 91 zu reinigen hat. Der Reinigungskopf 14 der Reinigungslanze 10 ist hierbei auf der Oberseite 96 des Tragflügels 91 abgestützt. Der Benutzer hält hier den Griffabschnitt 13 der Reinigungslanze in einer "angehobenen" Position, in der seine eine Hand einen in dieser Position nach unten weisenden "Pistolen"-Griff umspannt, der etwa in der Mitte zwischen dem endständigen Handgriff 11 und dem kreisringförmigen Handgriff 12 angeordnet ist der hier zum Be- oder Entlasten des Reinigungskopfes, d.h. zur Ausübung der Kraft benutzt wird, mit der der Berstenbesatz 26 der Reinigungsbürste 21 an die zu reinigende Fläche 96 angedrückt wird.

Vertikal verlaufende oder steil ansteigende Flächen können mittels der Reinigungslanze 10 dank der ergonomisch günstigen Anordnung der Handgriffe 11, 12 und 81 bequem, d.h. mit vergleichsweise geringem Kraftaufwand gereinigt werden.

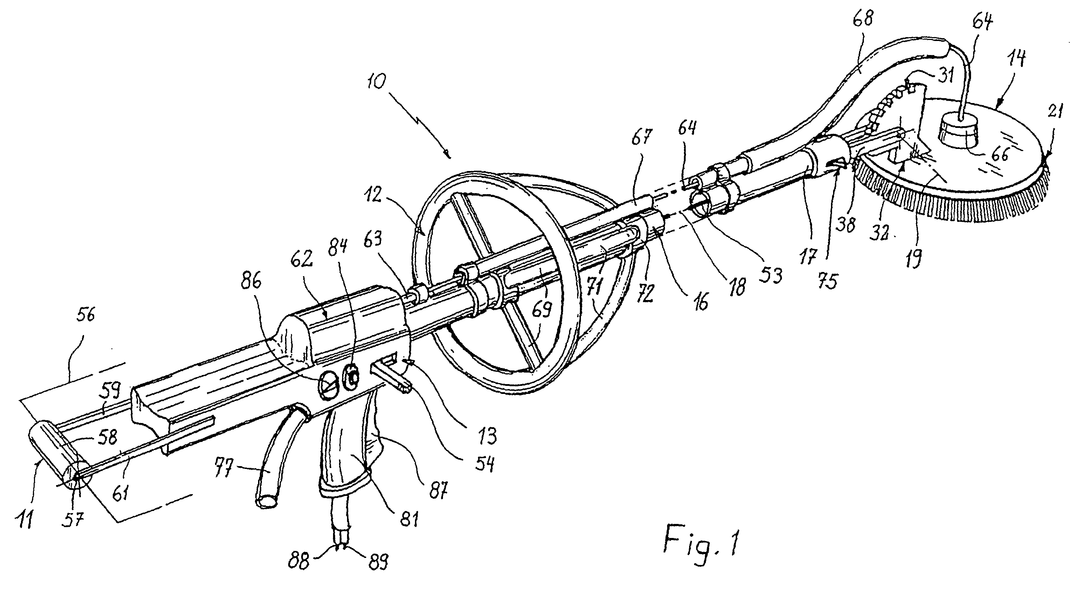

Um diese Handhabung der Reinigungslanze 10 zu erleichtern, sind die Handgriffe 11 und 12 (Fig. 1) symmetrisch, bezüglich der durch die zentrale Längsachse 18 des Schaftes 16 und die Schwenkachse 19 des Reinigungskopfes 14 markierten Längsmittelebene 56 ausgebildet, wobei die zentrale Längsachse 57 des zylindrisch-stabförmigen Griffstückes 58 des am benutzerseitigen Ende angeordneten Handgriffs 11 parallel zur Schwenkachse 19 in der Längsmittelebene 56 der Reinigungslanze 10 verläuft und sich zwischen parallelen Halteschenkeln 59 und 61 erstreckt.

Die Halteschenkel 59 und 61 des end-ständigen Handgriffs 11 sind am Gehäuse eines seitlich von dem Schaftrohr 16 angeordneten Elektromotors 62 montiert, dessen Abtriebswelle 63 parallel zur zentralen Längsachse 18 des Schaftes 16 und seitlich außerhalb von diesem verläuft. Sie ist über eine biegsame Welle 64 mit einem lediglich schematisch angedeuteten Antriebsteil 66 rotatorisch bewegungsgekoppelt, das am Gehäuse 22 des Reinigungskopfes 14 um dessen zentrale Achse 24 drehbar gelagert und drehfest mit dem Reinigungswerkzeug 21 koppelbar ist, das, je nach Verwendung der Lanze 10, gegen ein nicht dargestelltes Polier-Pad austauschbar ist, das seinerseits mit dem Antriebsteil 66 koppelbar ist.

Die biegsame Welle ist auf einem Teil ihrer Länge von einem starren Führungsrohr 67 (Fig. 2) aufgenommen, das seitlich an das Schaftrohr 16 angesetzt ist und sich über einen überwiegenden Teil der Länge derselben erstreckt und durch ein flexibles Führungsrohr 68 ergänzt wird, das sich bis in unmittelbare Nähe des Antriebsteils 66 erstreckt und seitliche Ausweichbewegungen der biegsamen Welle 64, die erforderlich sind, um verschiedene Schwenkpositionen des Reinigungskopfes 14 einstellen zu können, ermöglicht. Die biegsame Welle ist über eine nicht dargestellte, lösbare Kupplung mit dem Antriebsteil 66 des Reinigungskopfes 14 drehfest verbindbar.

Der Elektromotor 62 ist, in axialer Richtung gesehen, etwa in der Mitte zwischen den beiden Handgriffen 11 und 12 angeordnet, deren axialer Abstand voneinander etwa 1/4 bis 2/5 der Gesamtlänge der Reinigungslanze 10 beträgt.

Der zwischen dem Motor 62 und dem jeweiligen Arbeitskopf angeordnete Handgriff 12 ist als bezüglich der zentralen Längsachse 18 koaxialer Kreisring ausgebildet, der beim dargestellten, speziellen Ausführungsbeispiel über vier radiale Streben 69 mit dem Schaftrohr 16 stabil verbunden ist.

Des weiteren ist der Ringgriff 12 über Längsstreben 71, die in den durch die radialen Streben 69 markierten Radialebenen geradlinig geneigt oder flach-konvex gekrümmt verlaufen, mit einem das Schaftrohr 16 unmittelbar umgebenden und an diesem fest angesetzten Ring 72 verbunden, so daß ein insgesamt steifer Griff-Käfig gebildet ist. Der Ringgriff 12 ist im Bereich des Schwerpunktes der Reinigungslanze 10 angeordnet. Auch die Längsstege 71 sind zum Tragen der Reinigungslanze 10 benutzbar.

Die Reinigungslanze 10 ist auch mit einer insgesamt mit 75 bezeichneten Sprüh-Einrichtung ausgerüstet, mit der eine Reinigungsflüssigkeit, z.B. Wasser oder eine Lösung geeigneten Reinigungsmittels in den Arbeitsbereich der Reinigungslanze gesprüht werden kann. Diese Sprüheinrichtung 75 ist in der schmematisch stark vereinfachten Draufsicht der Fig. 3 durch zwei jeweils seitlich vom Schaftende angeordnete Sprühdüsen 73 und 74 repräsentiert, mittels derer, z.B. wenn das Reinigungswerkzeug 21 von der zu reinigenden Fläche 27 etwas abgehoben ist, Reinigungsflüssigkeit auf den Reinigungsbereich "unterhalb" oder "oberhalb" des Reinigungskopfes gesprüht werden kann, wenn das Reinigungswerkzeug von dem Reinigungsbereich abgesenkt ist. Hierbei kann eine der beiden Sprühdüsen so ausgebildet sein, daß sie eine konische Verteilung der Reinigungsflüssigkeit in mehreren "dünnen" Flüssigkeitsstrahlen ergibt, während die andere einen einzigen "scharfen" Flüssigkeitsstrahl abgibt. Die Flüssigkeitszufuhr zu der/den Sprühdüse (n) 73 und/oder 74 erfolgt über ein dem Schaft 16 entlang fest verlegtes Versorgungsrohr 76, das im Griffabschnitt 13 der Reinigungslanze 10 an eine flexible Zuführungsleitung 77 angeschlossen ist, die zu einem Vorratsbehälter 111 führt, der auf einem vom Benutzer mitführbaren Versorgungswagen 101 angeordnet ist.

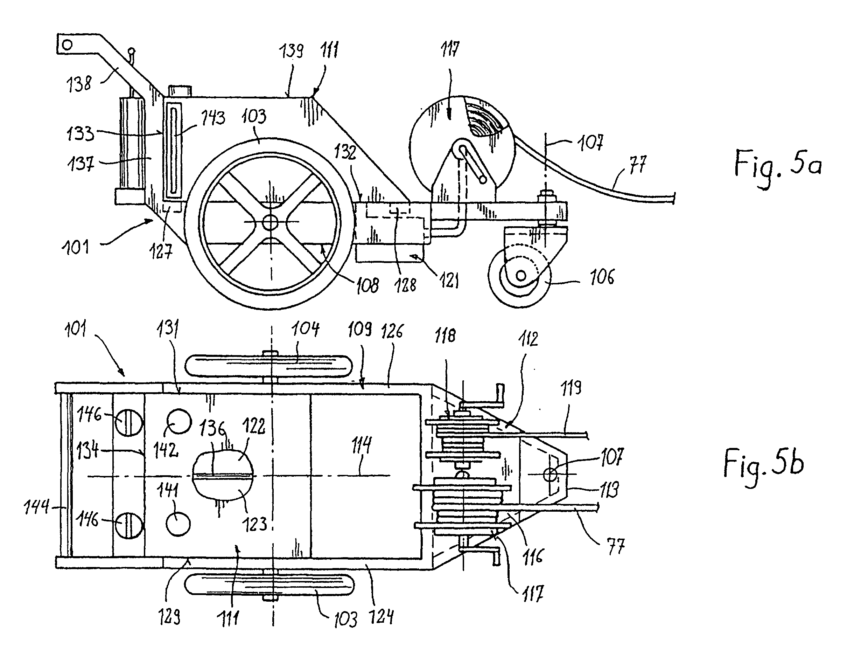

Um das Reinigungsgerät unabhängig von stationären Versorgungseinrichtungen benutzen zu können, ist ein in den Figuren 5a und 5b , auf deren Einzelheiten nunmehr Bezug genommen sei, insgesamt mit 101 bezeichneter Versorgungswagen vorgesehen, mittels dessen Vorratsmengen von Reinigungsflüssigkeit sowie von Spülflüssigkeit transportierbar sind, die für eine Reinigung von mehreren, z.B. fünf Kleinflugzeugen ausreichend sind.

Bei dem zur Erläuterung gewählten, speziellen Ausführungsbeispiel ist der Versorgungswagen 101 als dreirädriger Schubwagen ausgebildet, bei dem der überwiegende Teil der Last über zwei um eine gemeinsame wagenfeste Achse 102 frei drehbare Hinterräder 103 und 104 und ein nur relativ geringer Lastanteil über ein dem Durchmesser nach kleineres Bugrad 106 auf der Aufstandsfläche abgestützt ist, wobei das Bugrad als Lenkrolle ausgebildet ist, die um eine wagenfeste, "vertikale" Achse 107 frei drehbar an dem insgesamt mit 108 bezeichneten Fahrgestell des Versorgungswagens 101 gelagert ist, der dadurch leichtgängig lenkbar ist.

Das Fahrgestell 108 umfaßt einen der Grundform nach rechteckigen Rahmenbereich 109, der einen insgesamt mit 111 bezeichneten Vorratsbehälter für Reinigungsflüssigkeit sowie für Spülflüssigkeit trägt und einen den rechteckigen Rahmenbereich 109 bugseitig fortsetzenden, in der Draufsichtdarstellung der Fig. 5b gesehen trapezförmigen Rahmenbereich 112, der sich zum bugseitigen Fahrzeugende 113 hin verjüngt und symmetrisch zu der vertikalen, d.h. senkrecht zur Achse 102 der Hinterräder 103 und 104 verlaufenden Längsmittelebene 114 des Versorgungswagens 101 ausgebildet ist. Der trapezförmige Rahmenbereich 112 ist durch eine Platte 116 abgedeckt, auf der eine Schlauchtrommel 117 für die flexible Flüssigkeits-Versorgungsleitung 77 der Reinigungslanze 10 sowie eine Kabeltrommel 118 in der dargestellten Anordnung montiert sind, wobei ein auf die Kabeltrommel 118 aufwickelbares mehradriges Kabel 119 Versorgungsleitungen für den Antriebsmotor der Reinigungslanze 10 und Steuerleitungen für die Ansteuerung eines lediglich schematisch angedeuteten Pumpenaggregats 121 des Versorgungswagens 101 umfaßt, das eine elektrisch antreibbare Flüssigkeits-Förderpumpe zur Förderung von Reinigungs- oder Spülflüssigkeit zur Reinigungslanze 10 sowie zur Ansteuerung eines nicht dargestellten Umschaltventils umfaßt, über das alternativ ein Vorratsraum 122 für Reinigungsflüssigkeit oder ein Vorratsraum 123 für Spülflüssigkeit des Vorratsbehälters 111 an die Zulaufseite der Pumpe anschließbar sind.

Eine zur elektrischen Energieversorgung vorgesehene, nicht dargestellte Batterie ist zweckmäßigerweise in einer dem Pumpaggregat 121 entsprechenden Anordnung in unmittelbarer Nachbarschaft der Kabeltrommel 118 angeordnet. Das versorgungsseitige Ende des mehradrigen Kabels 119 ist über Schleifkontakte mit der Batterie und den Steueranschlüssen des Pumpaggregats 121 elektrisch verbunden.

Der Vorratsbehälter 111 ist auf zueinander parallelen Längsträgern 124 und 126 und diese stabil miteinander verbindenden, lediglich schematisch angedeuteten Querträgern 127 und 128 des rechteckigen Rahmenbereiches 109 abgestützt und auf diesem fest montiert.

Der Vorratsbehälter 111 hat von seinem Boden, der, abgesehen von schmalen Randstreifen die gesamte Grundfläche des rechteckigen Rahmenbereiches 109 einnimmt, senkrecht aufragende seitliche Außenwände 129 und 131, die in der Ansichtsdarstellung der Fig. 5a die Form eines rechtwinkligen Trapezes haben, das mit seiner längeren Basiskante 132 an den rechteckigen Rahmenbereich 109 anschließt, eine an die senkrechten Trapezkanten 133 anschließende Rückwand 134 an der dem bugseitigen Fahrzeugende 113 abgewandten Eckseite des Vorratsbehälters 111 und eine schräg abfallende Frontwand 136, die die schrägen Trapezkanten der seitlichen Außenwände 129 und 131 miteinander verbindet. Der solchermaßen "prismatisch" gestaltete Innenraum des Vorratsbehälters 111 ist durch eine entsprechend den seitlichen Außenwänden 129 und 131 trapezförmig gestaltete Zwischenwand 136 in die Teilräume 122 und 123 gleichen Aufnahmevolumens unterteilt, wobei der eine Aufnahmeraum, zur Aufnahme einer Waschflüssigkeit, insbesondere eine wässrigen Lösung eines Reinigungsmittels, und der andere Aufnahmeraum zur Aufnahme eines Spülmittelvorrats, insbesondere Wasser, benutzbar ist. Die beiden Teilräume 122 und 123 sind durch eine Deckenplatte 139 nach außen und gegeneinander dicht abgeschlossen, an der dicht verschließbare Einfüllstutzen 141 und 142 angeordnet sind, über die die Teilräume 122 und 123 befüllbar sind. Den Teilräumen 122 und 123, die je für sich eine Aufnahmekapazität um 100 1 haben, ist je ein Füllstands-Anzeigeröhrchen 143 zugeordnet. Im Bereich der heckseitigen Enden der Längsträger 124 und 126 des Fahrgestells 108 sind von diesem senkrecht aufragende Stützschenkel 137 vorgesehen, die sich bis in Höhe der Deckenplatte 139 des Vorratsbehälters 111 erstrecken und ab dieser Höhe vom Vorratsbehälter 111 weg weisende, schräg ansteigende Schenkelabschnitte 138 und mit kurzen horizontalen Endabschnitten endende Griffstücke haben, zwischen denen sich ein Griffstab 144 erstreckt, der ein bequemes Schieben oder Ziehen des Versorgungswagens 101 ermöglicht. Zwischen den Stützschenkeln 137 sind zwei, den Teilräumen 122 und 123 je einzeln zugeordnete, von Hand betätigbare Luftpumpen 146 vorgesehen, mittels derer die zwischen der Deckenplatte 139 und den jeweiligen Flüssigkeitsspiegeln vorhandenen Lufträume unter einen mäßigen Überdruck um 1 bis 2 bar gesetzt werden können, der den Flüssigkeitszustrom zur Förderpumpe des Pumpaggregats 121 gewährleistet. Die Gestaltung des Versorgungswagens 101 und die Dimensionierung des Vorratsbehälters 111 sind dahingehend aufeinander abgestimmt, daß bei maximaler Befüllung des Vorratsbehälters der horizontale Abstand des Schwerpunktes des Versorgungswagens 101 von der Drehachse 102 der Hinterräder 103 und 104 so klein ist, daß schon eine mäßige, nach unten gerichtete Kraft von z. B. 10 N bis 30 N, die über den Griffstab 144 auf den Versorgungswagen ausgeübt wird, ausreicht, um dessen Bugrad 106 weitgehend zu entlasten oder sogar anzuheben, was z. B. beim Überfahren von Unebenheiten zweckmäßig sein kann.

Um bei der Benutzung der Reinigungslanze 10 ggf. unabhängig von einem Versorgungswagen zu sein, z.B. in einer Situation, in der der Benutzer der Reinigungslanze 10 auf ein Gestell steigen muß, um an die zu reinigende Fläche heranzukommen, ist es zweckmäßig, wenn gleichsam als Ergänzungsgerät zu der Lanze 10 ein in der Art einer Weste oder eines Rucksack-Traggestells tragbares Energie- und Reinigungsmittel-Versorgungsaggregat vorhanden ist, das mit Anschlüssen für die elektrischen Versorgungsleitungen für den Antriebsmotor der Reinigungslanze sowie für die Flüssigkeitszufuhr zur Sprüheinrichtung 75 versehen ist.

Eine funktionell der Sprüheinrichtung 75' weitgehend analoge Sprüheinrichtung 75 kann, wie schematisch in der Figur 1 durch einen Flüssigkeits-Anschlußstutzen 78 des Reinigungskopfes 14 repräsentiert, in diesen integriert sein, wobei dieser Anschlußstutzen 78 über einen flexiblen Anschlußschlauch 79 mit einer der fest verlegten Versorgungsleitungen 76 der Reinigungslanze 10 lösbar verbindbar ist. Austrittsdüsen für die Reinigungsflüssigkeit sind bei dieser Gestaltung der Sprüheinrichtung zweckmäßigerweise in gleichmäßiger Verteilung in der Nähe des äußeren Randes des Reinigungswerkzeuges 21 am Gehäuse 22 des Reinigungskopfes 14 angeordnet.

Für eine bequeme Handhabung der Reinigungslanze 10 kann es auch zweckmäßig sein, wenn ihr Reinigungskopf nicht nur um die Querachse 19 schwenkbar, sondern auch um die zentrale Längsachse 18 der Reinigungslanze 10 drehbar ist und mindestens in zwei einander diametral gegenüberliegenden Positionen festlegbar ist, so daß Bedienungs- und Einstellelemente, z.B. ein Schalter 84 und ein Einstellelement 86 für das Einschalten des Antriebsmotors 62 und für dessen Drehzahl-Einstellung, sowie ein schwenkbares Griffelement 87 für die Dosierbetätigung von Ventilen der Sprüheinrichtung 75, die an einem vom Griffabschnitt der Lanze einseitig radial abstehenden "Pistolen"-Griff 81 oder in der Nähe desselben in einer ergonomisch besonders günstigen Gruppierung angeordnet sind, vom Benutzer der Reinigungslanze stets in derselben Anordnung benutzt werden können, unabhängig davon, ob der Reinigungskopf 14 nach oben oder nach unten weisend angeordnet ist.

Eine hierfür erforderliche Drehbarkeit des Reinigungskopfes 14 um die zentrale Längsachse 18 der Reinigungslanze 10 kann auf einfache Weise dadurch realisiert sein, daß die bei dem zur Erläuterung gewählten Ausführungsbeispiel den Stößel 47 enthaltende, das Montageteil 41 und das Zwischenstück 42 umfassende Baugruppe drehbar am Endabschnitt 17 des Schaftes 16 angeordnet ist und sowohl in der dargestellten Position des Reinigungskopfes 14 als auch in der gegenüber dieser um 180° gedrehten Position feststellbar ist. Eine dafür geeignete, konstruktive Abwandlung des dargestellten Ausführungsbeispiels kann darin bestehen, daß das Zwischenstück 42 auf den Endabschnitt 17 des Schaftes 16 drehbar aufgesteckt ist und in der jeweils genutzten Funktionsstellung des Reinigungskopfes 14 mittels eines radialen Schraubbolzens 82, dessen inneres Ende formschlüssig in eine radiale Bohrung 83 des Endabschnittes 17 eingreift, feststellbar ist, wobei mögliche Rast-Stellungen durch die Anordnung solcher Bohrungen am Endabschnitt 17 des Schaftes 16 gegeben sind.

Alternativ oder ergänzend hierzu kann eine die Einstellung einer Vielzahl verschiedener Gebrauchspositionen und Orientierungen des Reinigungskopfes 14 ermöglichende Gestaltung der Reinigungslanze 10 auch darin bestehen, daß der Reinigungskopf 14 mittels eines Kugelgelenks am Ende des Lanzenschaftes 16 gelagert ist, dessen Lagerkugel auf ihrer gesamten freien Oberfläche mit Rast-Vertiefungen versehen ist, mit denen der Stößel 47 in den kraftformsschlüssigen Rast-Eingriff gelangen kann.

In der Gestaltung der Reinigungslanze 10 mit einem Pistolengriff 81 ist es besonders zweckmäßig, wenn die beiden Anschlüsse 88 und 89 für die Stromversorgung des Elektromotors 62 am freien Ende des Pistolengriffes 81 angeordnet sind.

## Patentansprüche

1. Reinigungsgerät für die Säuberung der Außenhaut von Luft- und Landfahrzeugen oder von Bootskörpern, mit einem am freien Ende eines langgestreckten, rohrförmigen Schaftes (16) angeordneten Reinigungskopf (14), der ein mittels eines Elektromotors (62) rotatorisch oder oszillatorisch antreibbares Reinigungswerkzeug (21) umfaßt, wobei dieser Elektromotor (62) innerhalb eines vom Reinigungskopf (14) entfernt angeordneten Griffabschnitts (13) mit Handgriffen (11, 12) zum Führen des Reinigungsgeräts (10) angeordnet und über eine biegsame Welle (64) mit dem Reinigungswerkzeug (21) antriebsgekoppelt ist und der Reinigungskopf (14) um eine quer zur zentralen Längsachse (18) des Reinigungsgeräts (10), vorzugsweise rechtwinklig zu dieser verlaufende und diese schneidende Achse (19) schwenkbar ausgebildet ist, wobei eine Feststellvorrichtung (32, 47) vorgesehen ist, mittels derer der Reinigungskopf (14) in definierten Orientierungen bezüglich einer die zentrale Achse (18) des Schaftes (16) und die Achse (19) enthaltenden Längsmittelebene (56) des Schaftes (16) lösbar feststellbar ist, **dadurch gekennzeichnet, daß** die Feststellvorrichtung (32, 37) einen stabförmigen, beweglichen Stößel (47) umfaßt, der in Richtung seiner Längsachse verschiebbar geführt ist und unter der Wirkung einer Vorspannkraft steht, die den Stößel in kraftformschlüssigem Eingriff mit Rastausnehmungen komplementärer Kontur eines mit dem Reinigungskopf (14) fest verbundenen Lagerkörpers (32) drängt, die den definiert verschiedenen Orientierungen des Reinigungskopfes (14) zugeordnet sind, und daß die Feststellvorrichtung (32, 47) nach einer Aufhebung der Lösebetätigung wieder selbsttätig in eine Feststellfunktionsstellung einrückt.

2. Reinigungsgerät nach Anspruch 1, **dadurch gekennzeichnet, daß** der Lagerkörper (32) als eine kreissektorförmige Zahnscheibe mit einer Außenzahnung (31) ausgebildet ist, mit der das Stößelende (48) in kämmenden Eingriff gedrängt ist (Fig. 2).

3. Reinigungsgerät nach Anspruch 1, **dadurch gekennzeichnet, daß** der Lagerkörper als eine mit Rastausnehmungen versehene Gelenkkugel eines Kugelgelenks ausgebildet ist, wobei die Rastausnehmungen im Sinne einer dichtestmöglichen Anordnung, die mit einer stabilen Fixierung des Reinigungskopfes (14) verträglich ist, über die Kugeloberfläche verteilt angeordnet sind.

4. Reinigungsgerät nach einem der Ansprüche 1 bis 3, **dadurch gekennzeichnet, daß** der Reinigungskopf (14) um die zentrale Längsachse (18) des Schafts (16) drehbar angeordnet ist und in mindestes zwei einander diametral gegenüberliegenden Drehstellungen lösbar fixierbar ist.

5. Reinigungsgerät nach einem der Ansprüche 1 bis 4, **dadurch gekennzeichnet, daß** im Bereich des Schwerpunktes des Reinigungsgeräts ein dessen Schaft (16) in radialem Abstand umgebender, vorzugsweise kreisringförmiger Handgriff (12) vorgesehen ist, der über in Radialebenen des Geräts verlaufende Stützstreben (69 und 71), die insgesamt eine käfig-förmige Konfiguration ergeben, an dem zentralen Schaft (16) abgestützt ist.

6. Reinigungsgerät nach einem der Ansprüche 1 bis 5, **dadurch gekennzeichnet, daß** an dem benutzerseitigen, vom Reinigungskopf (14) entfernten Ende des Reinigungsgeräts (10) ein der Grundform nach zylindrischstabförmiger Handgriff (11) angeordnet ist, dessen zentrale Achse (57) rechtwinklig zu der zentralen Längsachse (18) des Schaftes (16) verläuft, diese schneidet und in derjenigen Längsmittelebene der Lanze verläuft, gegenüber der der Reinigungskopf (14) schräg anstellbar ist.

## Claims

1. Cleaning device for cleaning the outer skin of aircraft, land vehicles, or the hulls of boats, comprising a cleaning head (14) arranged on the free end of a longitudinally extended tubular shaft, and which comprises a cleaning tool (21) which can be driven in a rotating or oscillating manner by means of an electric motor (62) which motor is provided within a grip section distantly arranged from the cleaning head (14) and provided with handles (11, 12) for manipulation of the cleaning device (10), and drivingly coupled with the cleaning tool (21) by means of a flexible shaft said cleaning head (14) being pivotally mounted around an axis (19) extending across the longitudinal central axis (18) of the cleaning device (10) preferably at a right angle thereto and intersecting the same, and further comprising a locking device (32, 47) by means of which the cleaning head (14) can be locked in defined orientations with respect to a longitudinal central plane (56) of the shaft (16) containing the central axis (18) of the shaft and the pivotal axis (19), and unlocked, **characterized in that** the locking device (32, 37) comprises a rod-shaped moveable tappet (47) which is slidently guided in the direction of its longitudinal axis and supposed to the action of a pretensioning force, pushing the tappet into positive engagement with complementary shaped recesses of a bearing body (32) fixedly connected with the cleaning head (14) which are related to the various defined orientations of the cleaning head (14), and **in that** after a termination of the unlocking actuation, the locking device (32, 47) returns automatically to its locking-function position.

2. Cleaning device according to claim 1, **characterized in that** the bearing body (32) is designed as a circular sector shaped tooth lock washer with an external toothing with which the end of tappet (48) is pushed into mating engagement (Fig. 2).

3. Cleaning device according to claim 1, **characterized in that** the bearing body is designed as the ball of a ball-and-socket joint, being provided with catching recesses which are arranged on the ball surface in the sense of the most dense distribution which still provides for a stable fixation of the cleaning head (14).

4. Cleaning device according to any of claims 1 through 3, **characterized in that** the cleaning head (14) is arranged rotatably around the central longitudinal axis (18) of the shaft (16) and can be locked in at least two diametrically opposed rotary positions and unlocked therefrom.

5. Cleaning device according to any of claims 1 through 4, **characterized in that** in a region near the center of mass of the cleaning device, a handle surrounding the shaft (16) in radial distance - preferably of circular ring-shaped form - is provided, said handle being supported on the central shaft (16) by means of supporting braces extending in radial planes of the device, and together forming a cage-shaped configuration.

6. Cleaning device according to any of claims 1 through 5, **characterized in that** a handle (11) of cylindrical rod-shaped basic form is arranged at the user-side end of the device remote from the cleaning head (14), the central axis (57) of which handle (11) extending rectangularly to the central longitudinal axis (18) of the shaft (16), intersecting said longitudinal axis and extending **in that** longitudinal central plane of the lance with respect to which the cleaning head (14) can be brought into an inclined orientation.

## Revendications

1. Dispositif pour le nettoyage du bordé d'aéronefs, de véhicules ou de coques de bateaux, comprenant une tête de nettoyage (14), située au bout libre d'une tige (16) tubulaire allongée et comprenante un outil de nettoyage qui peut être actionné d'une manière rotative ou oscillatoire par un monteur électrique qui est situé dans une section (13) de poignées (11, 12) pour la manipulation du dispositif de nettoyage (10) qui est éloignée de la tête de nettoyage, ledit moteur électrique (62) ayant un couplage d'entraînement avec le tête de nettoyage (14) par un arbre flexible, ladite tête de nettoyage étant pivotante autour d'une axe (19) s'étendante à travers l'axe central longitudinal (18) du dispositif de nettoyage (10), préférablement à angle droit et coupante ledit axe, et comprenante aussi un dispositif de blocage (32, 47) par lequel la tête de nettoyage (14) peut être bloquée en orientations définies par rapport à un plan longitudinal central (56) de la tige (16) contenant l'axe (19), et peut être débloquée aussi, **caractérisé en ce que** le dispositif de blocage (32, 37) comprend un coulissant mobile (47) d'une forme de bâton qui est guidé déplaçablement en direction de son axe longitudinal et soumis à l'action d'une force de prétension qui pousse le coulisseau vers une position d'engagement positif avec des creux de forme complémentaire d'un corps de palier (32) qui est solide avec la tête de nettoyage (14) lesdits creux étant en corrélation avec les différentes orientations définies de la tête de nettoyage (14), et **en ce qu'**après termination de l'action de déblocage le dispositif de blocage (32, 47) retourne automatiquement à une position de fonction de blocage

2. Dispositif de nettoyage selon la revendication 1, **caractérisé en ce que** le corps du palier (32) est formé comme secteur de cercle d'une rondelle à dents chevauchantes extérieures avec lesquelles le bout (48) du coulisseau est poussé en engrènement

3. Dispositif de nettoyage selon la revendication 1 **caractérisé en ce que** le corps du palier est formé comme boule d'un joint sphérique dont la boule est pourvue de creux d'encliquetage dont la densité de distribution sur la surface sphérique est la plus haute que possible en sens d'ateindre encore une stabilité suffisante de l'embrayage de la tête de nettoyage (14)

4. Dispositif de nettoyage selon une des revendications 1 à 3, **caractérisé en ce que** la tête de nettoyage (14) est arrangée mobile autour de l'axe central longitudinal de la tige (16) et qu'il y a au moins deux positions de rotation diamétralement opposées de blocage et de dé blocage de la tête de nettoyage

5. Dispositif de nettoyage selon une des revendications 1 à 4, **caractérisé en ce que** dans une zone près du centre de masse du dispositif de nettoyage une poignée est pourvue, préférablement de la forme d'une couronne qui entoure la tige (16) du dispositif de nettoyage en distance radiale, ladite poignée (12) étant supportée à la tige centrale (16) par des jambes de support (69 et 71) qui s'étendent dans des plans radiaux du dispositif et forment ensemble une configuration de cage.

6. Dispositif de nettoyage selon une des revendications 1 à 5 **caractérisé en ce qu'**au bout utilisateur du dispositif et loin de la tête de nettoyage une poignée (11) de forme d'un bâton cylindrique est pourvue dont l'axe central (18) travorse la tige (16) à angle droit et s'étend dans ce plan central longitudinal à rapport duquel la tête (14) de nettoyage peut être inclinée.
